# EUROPEAN PATENT APPLICATION

(11) **EP 3 211 564 A1**
(43) Date of publication of application: **30.08.2017**
(21) Application number: 16204320.2
(22) Date of filing: 15.12.2016
(51) Int. Cl.: G06K 9/00, G06K 9/32

(54) **METHOD AND DEVICE FOR VERIFYING A FINGERPRINT**

(30) Priority: 29.02.2016 CN 201610112810
(71) Applicant: Beijing Xiaomi Mobile Software Co., Ltd., Beijing 100085 (CN)
(72) Inventor: HAO, Ning, Beijing, Beijing 100085 (CN); SUN, Wei, Beijing, Beijing 100085 (CN); YANG, Yizhen, Beijing, Beijing 100085 (CN)
(74) Representative: dompatent von Kreisler Selting Werner - Partnerschaft von Patent- und Rechtsanwälten mbB

(57) **Abstract**

The present disclosure discloses a method and a device for verifying a fingerprint, which pertains to computer technology. The method includes: generating (101), when a user's finger slides in a fingerprint collection area, a fingerprint image to be verified; comparing (102) the fingerprint image to be verified with a referential fingerprint image; and determining (103), when the fingerprint image to be verified is the same as the referential fingerprint image, that verification for the user's fingerprint succeeds. In the disclosure, a dynamic fingerprint image to be verified may be generated through combination of a slide action of the finger and a fingerprint of the finger, and the verification of the fingerprint is performed using the dynamic fingerprint image to be verified.

## Description

### FIELD

The present disclosure generally relates to a computer technology, and more particularly to a method and a device for verifying a fingerprint.

### BACKGROUND

Currently, a terminal, before verifying a fingerprint, may prompt a user to put a finger on a fingerprint sensor and collect the fingerprint of the finger via the fingerprint sensor, as a referential fingerprint. The terminal, during verification of a fingerprint, may collect the user's fingerprint to be matched, detect whether the fingerprint to be matched is the same as the referential fingerprint, and determine, when the fingerprint to be matched is the same as the referential fingerprint, that verification succeeds. The technical problem solved by the present invention is to enhance security provided by a fingerprint sensor.

### SUMMARY

In view of the fact in the related art, the present disclosure provides a method and a device for verifying a fingerprint.

According to a first aspect of the embodiments of the present disclosure, a method for verifying a fingerprint is provided, and the method includes: generating, when a user's finger slides in a fingerprint collection area, a fingerprint image to be verified; comparing the fingerprint image to be verified with a referential fingerprint image; and determining, when the fingerprint image to be verified is the same as the referential fingerprint image, that verification for the user's fingerprint succeeds.

Optionally, the referential fingerprint image is determined by: acquiring, when the user's finger slides in the fingerprint collection area, a fingerprint of the finger and an acting position of the finger every predetermined time interval; and generating, after the finger stops sliding, the referential fingerprint image by compositing each fingerprint based on respective acting position.

Optionally, the generating, when a user's finger slides in a fingerprint collection area, a fingerprint image to be verified includes: acquiring, when the user's finger slides in the fingerprint collection area, a fingerprint of the finger and an acting position of the finger every predetermined time interval; and generating, after the finger stops sliding, the fingerprint image to be verified by compositing each fingerprint based on respective acting position.

Optionally, the comparing the fingerprint image to be verified with a referential fingerprint image includes: acquiring a first fingerprint feature formed in an overlapping area among each fingerprint of the fingerprint image to be verified; compositing a second fingerprint feature formed in an overlapping area among each fingerprint of the referential fingerprint image; comparing the first fingerprint feature with the second fingerprint feature; and determining, when the first fingerprint feature is the same as the second fingerprint feature, that the fingerprint image to be verified is the same as the referential fingerprint image.

Optionally, the method further includes: detecting whether a slide direction of the finger is the same as a slide direction of generating the referential fingerprint image; determining, when the slide direction of the finger is different from the slide direction of generating the referential fingerprint image, that the verification of the user's fingerprint fails; and triggering, when the slide direction of the finger is the same as the slide direction of generating the referential fingerprint image, the step of generating a fingerprint image to be verified.

According to a second aspect of the embodiments of the present disclosure, a device for verifying a fingerprint is provided, and the device includes: a first generation module configured to generate, when a user's finger slides in a fingerprint collection area, a fingerprint image to be verified; an image comparison module configured to compare the fingerprint image to be verified generated by the first generation module with a referential fingerprint image; and a first verification module configured to determine, when it is determined by the image comparison module that the fingerprint image to be verified is the same as the referential fingerprint image, that verification of the user's fingerprint succeeds.

Optionally, the referential fingerprint image is determined by a parameter acquisition module, a second generation module, and an image storage module, and wherein the parameter acquisition module is configured to acquire, when the user's finger slides in the fingerprint collection area, a fingerprint of the finger and an acting position of the finger every predetermined time interval; and the second generation module is configured to generate, after the finger stops sliding, the referential fingerprint image by compositing each fingerprint based on respective acting position.

Optionally, the first generation module includes: a parameter acquisition submodule configured to acquire, when the user's finger slides in the fingerprint collection area, a fingerprint of the finger and an acting position of the finger every predetermined time interval; and an image generation submodule configured to generate, after the finger stops sliding, the fingerprint image to be verified by compositing each fingerprint acquired by the parameter acquisition submodule based on respective acting position.

Optionally, the image comparison module includes: a feature acquisition submodule configured to acquire a first fingerprint feature formed in an overlapping area among each fingerprint of the fingerprint image to be verified, and composite a second fingerprint feature formed in an overlapping area among each fingerprint of the referential fingerprint image; a feature comparison submodule configured to compare the first fingerprint feature with the second fingerprint feature; and a result determination submodule configured to determine, when it is determined by the feature comparison submodule that the first fingerprint feature is the same as the second fingerprint feature, that the fingerprint image to be verified is the same as the referential fingerprint image.

Optionally, the device further includes: a slide detection module configured to detect whether a slide direction of the finger is the same as a slide direction of generating the referential fingerprint image; a second verification module configured to determine, when it is detected by the slide detection module that the slide direction of the finger is different from the slide direction of generating the referential fingerprint image, that the verification of the user's fingerprint fails; and a step trigger module configured to trigger, when it is detected by the slide detection module that the slide direction of the finger is the same as the slide direction of generating the referential fingerprint image, the first generation module to generate the fingerprint image to be verified.

According to a third aspect of the embodiments of the present disclosure, a device for verifying a fingerprint is provided, and the device includes: a processor; a memory for storing processor-executable instructions; wherein the processor is configured to: generate, when a user's finger slides in a fingerprint collection area, a fingerprint image to be verified; compare the fingerprint image to be verified with a referential fingerprint image; and determine, when the fingerprint image to be verified is the same as the referential fingerprint image, that verification of the user's fingerprint succeeds.

According to a fourth aspect of the embodiments of the present disclosure, a non-transitory computer-readable medium is provided, which is readable by a computer and has recorded thereon a computer program including instructions for executing the steps of a method for verifying a fingerprint according to the first aspect of the embodiments.

The technical solution provided by the embodiments of the present disclosure may include the following effects.

In the method provided by the present disclosure, a fingerprint image to be verified is generated when a user's finger slides in a fingerprint collection area; the fingerprint image to be verified is compared with a referential fingerprint image; and it is determined, when the fingerprint image to be verified is the same as the referential fingerprint image, that verification for the user's fingerprint succeeds. Thus, a dynamic fingerprint image to be verified may be generated through combination of a slide action of the finger and a fingerprint of the finger, and the verification of the fingerprint is performed using the dynamic fingerprint image to be verified. As a result, the problem that the terminal is not safe if the user's fingerprint is leaked in the case that the verification of the fingerprint is performed by utilizing a static fingerprint image to be verified may be solved, and the security of the terminal may be improved.

It may be determined, when the slide direction of the finger is different from the slide direction of generating the referential fingerprint image, the verification of the user's fingerprint fails. Since determination of the slide direction may be easier, the fingerprint to be verified with mismatched slide direction may be excluded firstly. Thus, a waste of resources used to generate the fingerprint images to be verified for these fingerprints may be avoided, and resources may be saved.

It is to be understood that the forgoing general description and the following detailed description are illustrative only, and are not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart illustrating a method for verifying a fingerprint according to an exemplary embodiment.
Fig. 2A is a flow chart illustrating a method for verifying a fingerprint according to another exemplary embodiment.
Fig. 2B is a schematic diagram illustrating a fingerprint image to be verified according to another exemplary embodiment.
Fig. 3 is a block diagram illustrating a device for verifying a fingerprint according to an exemplary embodiment.
Fig. 4 is a block diagram illustrating a device for verifying a fingerprint according to an exemplary embodiment.
Fig. 5 is a block diagram illustrating a device for verifying a fingerprint according to an exemplary embodiment.

### DETAILED DESCRIPTION

Reference will now be made in detail to example embodiments, examples of which are illustrated in the accompanying drawings. The following description refers to the accompanying drawings in which same numbers in different drawings represent same or similar elements unless otherwise described. The implementations set forth in the following description of example embodiments do not represent all implementations consistent with the present disclosure. Instead, they are merely examples of devices and methods consistent with aspects related to the present disclosure as recited in the appended claims.

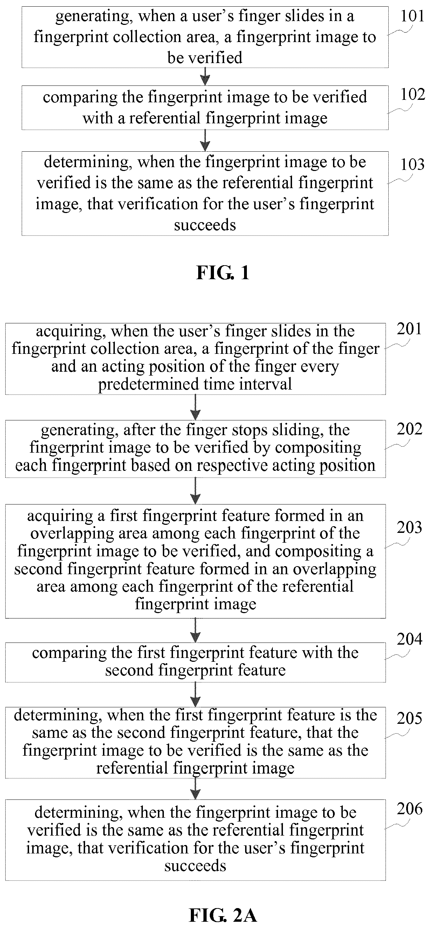

Fig. 1 is a flow chart illustrating a method for verifying a fingerprint according to an exemplary embodiment. The method for verifying a fingerprint may be applied in a terminal. As shown in Fig. 1, the method for verifying a fingerprint may include the following steps.

In step 101, when a user's finger slides in a fingerprint collection area, a fingerprint image to be verified may be generated.

In step 102, the fingerprint image to be verified may be compared with a referential fingerprint image.

In step 103, when the fingerprint image to be verified is the same as the referential fingerprint image, it may be determined that verification for the user's fingerprint succeeds.

In conclusion, in the method for verifying a fingerprint provided in the present disclosure, fingerprint image to be verified is generated when a user's finger slides in a fingerprint collection area; the fingerprint image to be verified is compared with a referential fingerprint image; and it is determined, when the fingerprint image to be verified is the same as the referential fingerprint image, that verification for the user's fingerprint succeeds. Thus, a dynamic fingerprint image to be verified may be generated through combination of a slide action of the finger and a fingerprint of the finger, and the verification of the fingerprint is performed using the dynamic fingerprint image to be verified. As a result, the problem that the terminal is not safe if the user's fingerprint is leaked in the case that the verification of the fingerprint is performed by utilizing a static fingerprint image to be verified may be solved, and the security of the terminal may be improved.

Fig. 2A is a flow chart illustrating a method for verifying a fingerprint according to another exemplary embodiment, and the method may be applied in a terminal. As shown in Fig. 2A, the method for verifying a fingerprint may include the following steps.

In step 201, when the user's finger slides in the fingerprint collection area, a fingerprint of the finger and an acting position of the finger may be acquired every predetermined time interval.

The fingerprint collection area may be an area provided with a fingerprint sensor. When the user's finger acts on the fingerprint collection area, the fingerprint sensor may acquire the user's fingerprint. The fingerprint may be served as the fingerprint image to be verified for subsequent verification.

In the related art, the user's finger may statically act on the fingerprint collection area and the fingerprint sensor may acquire a static fingerprint image to be verified. When the static fingerprint image to be verified is leaked, other people may freely operate the terminal by inputting the static fingerprint image to be verified during verification, which leaves the terminal unsafe. Furthermore, the fingerprint is unchangeable, and once the static fingerprint image to be verified is leaked, the user cannot modify it later on.

In the embodiment, the terminal may acquire a dynamic fingerprint image to be verified generated by the finger during the sliding. Thus, although the static fingerprint image to be verified is leaked, the security of the terminal may not be threatened, and thus the security of the terminal may be improved.

In the implementation, when the user's finger slides in the fingerprint collection area, the fingerprint sensor may acquire a fingerprint of the finger every predetermined time interval. The value of the predetermined time interval may be self-set by the user and will not be limited in the embodiment.

Generally, the predetermined time interval may be set to be very short so as to avoid the problem that the acquired dynamic fingerprint image to be verified, due to the different slide speeds, may be different from the referential fingerprint image, which results in failure of the verification. In a possible implementation, the predetermined time interval may be set as 1/10000s, that is, the collection frequency is 100KHz/s.

Since the dynamic fingerprint image to be verified is generated based on the slide of the finger, acting positions of the finger may be recorded so as to composite the fingerprints at respective acting positions. The acting positions may be represented by coordinates and this is not be limited in the embodiment.

In step 202, after the finger stops sliding, the fingerprint image to be verified may be generated by compositing each fingerprint based on respective acting position.

The fingerprint sensor may stop acquiring the fingerprint of the finger after the finger stops sliding. The terminal may composite each acquired fingerprint at respective acting position to generate a fingerprint image as the fingerprint image to be verified.

For example, the terminal may acquire the same fingerprint at acting positions 1, 2, 3 and 4 respectively, and composite the fingerprint into positions 1, 2, 3 and 4 to generate a fingerprint image to be verified which has 4 overlapped fingerprints.

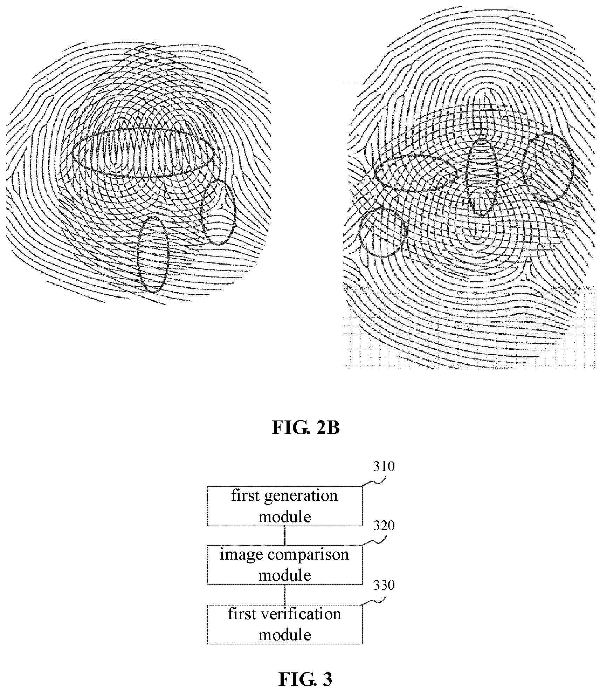

For ease of understanding, a schematic diagram of a fingerprint image to be verified is illustrated in Fig. 2B. The fingerprint image to be verified in the left-hand view is acquired by the finger's lateral slide, and the fingerprint image to be verified in the right-hand view is acquired by the finger's longitudinal slide.

In step 203, a first fingerprint feature formed in an overlapping area among each fingerprint of the fingerprint image to be verified may be acquired, and a second fingerprint feature formed in an overlapping area among each fingerprint of the referential fingerprint image may be composited.

The referential fingerprint image is a fingerprint image set by the owner of the terminal for verification before the verification is performed. The referential fingerprint image may be determined by: 1) acquiring, when the user's finger slides in the fingerprint collection area, a fingerprint of the finger and an acting position of the finger every predetermined time interval; and 2) generating, after the finger stops sliding, the referential fingerprint image by compositing each fingerprint based on respective acting position.

The process of acquiring the referential fingerprint image by the terminal is the same as the process of acquiring the fingerprint image to be verified, and will not be described herein. The terminal may store the referential fingerprint image after the referential fingerprint image is acquired, such that the terminal may use the referential fingerprint image to perform the verification of the fingerprint. The slide direction and the slide path of the slide operation may be random and will not be limited in the embodiment.

After acquiring the fingerprint image to be verified, the terminal may compare the fingerprint image to be verified with a referential fingerprint image. When the fingerprint image to be verified is the same as the referential fingerprint image, it is determined that verification for the user's fingerprint succeeds. When the fingerprint image to be verified is different from the referential fingerprint image, it is determined that the verification of the user's fingerprint fails. The fingerprint image to be verified being the same as the referential fingerprint image refers to that the similarity between the fingerprint image to be verified and the referential fingerprint image exceeds a predetermined threshold, and the fingerprint image to be verified being different from the referential fingerprint image refers to that the similarity between the fingerprint image to be verified and the referential fingerprint image does not exceed the predetermined threshold, wherein the predetermined threshold may be self-set by the user.

The fingerprint feature of the fingerprint image to be verified may be compared with the fingerprint feature of the referential fingerprint image when comparing the fingerprint image to be verified with the referential fingerprint image. The fingerprint feature refers to a feature which generates during overlapping the fingerprints and enables to represent the fingerprint, for example, the circled parts of Fig. 2B. In the embodiment, each fingerprint feature of the fingerprint image to be verified may be referred to as a first fingerprint feature, and each fingerprint feature of the referential fingerprint image may be referred to as a second fingerprint feature.

In step 204, the first fingerprint feature may be compared with the second fingerprint feature.

The terminal may compare whether the first fingerprint feature and the second fingerprint feature at each corresponding position are the same, and may acquire the similarity by calculating the ratio of the number of the identical fingerprint features and the total number of the fingerprint features in the fingerprint image.

In step 205, when the first fingerprint feature is the same as the second fingerprint feature, it is determined that the fingerprint image to be verified is the same as the referential fingerprint image.

In step 206, when the fingerprint image to be verified is the same as the referential fingerprint image, it is determined that verification for the user's fingerprint succeeds.

As known in Fig. 2B, whether the verification of the fingerprint succeeds relates to the slide direction. When the slide direction mismatches, the verification of the fingerprint will fail. When the slide direction matches, the verification of the fingerprint may succeed. Furthermore, compositing the dynamic fingerprint image to be verified may consume more resources. Thus, in order to save resources, the terminal may exclude the fingerprint to be verified with mismatched slide direction, such that corresponding fingerprint image to be verified may not be generated for the fingerprint.

Therefore, the method provided by the embodiment further includes: 1) detecting whether the slide direction of the finger is the same as the slide direction of generating the referential fingerprint image; 2) determining, when the slide direction of the finger is different from the slide direction of generating the referential fingerprint image, the verification of the user's fingerprint fails; and 3) triggering, when the slide direction of the finger is the same as the slide direction of generating the referential fingerprint image, the step of acquiring a fingerprint of the finger and an acting position of the finger every predetermined time interval in step 201.

For example, the slide direction of generating the referential fingerprint image is from up to down. When the slide direction of generating the fingerprint image to be verified is from left to right, it may be determined directly that the verification of the fingerprint fails, and the process may be ended. When the slide direction of generating the fingerprint image to be verified is from up to down, the fingerprint image to be verified will be generated. The fingerprint image to be verified may be compared with the referential fingerprint image, and whether the verification of the fingerprint succeeds may be determined based on the result of the comparison.

It should be noted that, in the embodiment, the owner of the terminal may reset a referential fingerprint image according to a new slide operation when the dynamic fingerprint image to be verified is leaked, wherein the referential fingerprint image is different from the dynamic fingerprint image to be verified, such that the security of the terminal may be guaranteed.

In conclusion, in the method for verifying a fingerprint provided in the present disclosure, fingerprint image to be verified is generated when a user's finger slides in a fingerprint collection area; the fingerprint image to be verified is compared with a referential fingerprint image; and it is determined, when the fingerprint image to be verified is the same as the referential fingerprint image, that verification for the user's fingerprint succeeds. Thus, a dynamic fingerprint image to be verified may be generated through combination of a slide action of the finger and a fingerprint of the finger, and the verification of the fingerprint is performed using the dynamic fingerprint image to be verified. As a result, the problem that the terminal is not safe if the user's fingerprint is leaked in the case that the verification of the fingerprint is performed by utilizing a static fingerprint image to be verified may be solved, and the security of the terminal may be improved.

It may be determined, when the slide direction of the finger is different from the slide direction of generating the referential fingerprint image, the verification of the user's fingerprint fails. Since determination of the slide direction may be easier, the fingerprint to be verified with mismatched slide direction may be excluded firstly. Thus, a waste of resources used to generate the fingerprint images to be verified for these fingerprints may be avoided, and the resources may be saved.

Fig. 3 is a block diagram illustrating a device for verifying a fingerprint according to an exemplary embodiment, and the device for verifying a fingerprint may be applied in a terminal. As shown in Fig. 3, the device for verifying a fingerprint may include a first generation module 310, an image comparison module 320, and a first verification module 330. The first generation module 310 may be configured to generate, when a user's finger slides in a fingerprint collection area, a fingerprint image to be verified. The image comparison module 320 may be configured to compare the fingerprint image to be verified generated by the first generation module 310 with a referential fingerprint image. The first verification module 330 may be configured to determine, when it is determined by the image comparison module 320 that the fingerprint image to be verified is the same as the referential fingerprint image, that verification of the user's fingerprint succeeds.

In conclusion, in the device for verifying a fingerprint provided in the present disclosure, fingerprint image to be verified is generated when a user's finger slides in a fingerprint collection area; the fingerprint image to be verified is compared with a referential fingerprint image; and it is determined, when the fingerprint image to be verified is the same as the referential fingerprint image, that verification for the user's fingerprint succeeds. Thus, a dynamic fingerprint image to be verified may be generated through combination of a slide action of the finger and a fingerprint of the finger, and the verification of the fingerprint is performed using the dynamic fingerprint image to be verified. As a result, the problem that the terminal is not safe if the user's fingerprint is leaked in the case that the verification of the fingerprint is performed by utilizing a static fingerprint image to be verified may be solved, and the security of the terminal may be improved.

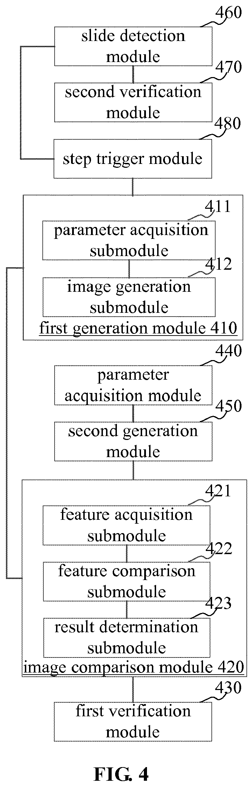

Fig. 4 is a block diagram illustrating a device for verifying a fingerprint according to an exemplary embodiment, and the device for verifying a fingerprint may be applied in a terminal. As shown in Fig. 4, the device for verifying a fingerprint may include a first generation module 410, an image comparison module 420, and a first verification module 430. The first generation module 410 may be configured to generate, when a user's finger slides in a fingerprint collection area, a fingerprint image to be verified. The image comparison module 420 may be configured to compare the fingerprint image to be verified generated by the first generation module 410 with a referential fingerprint image. The first verification module 430 may be configured to determine, when it is determined by the image comparison module 420 that the fingerprint image to be verified is the same as the referential fingerprint image, that verification of the user's fingerprint succeeds.

Optionally, the referential fingerprint image may be determined by a parameter acquisition module 440, a second generation module 450, and an image storage module 460. The parameter acquisition module 440 may be configured to acquire, when the user's finger slides in the fingerprint collection area, a fingerprint of the finger and an acting position of the finger every predetermined time interval. The second generation module 450 may be configured to generate, after the finger stops sliding, the referential fingerprint image by compositing each fingerprint based on respective acting position.

Optionally, the first generation module 410 may include a parameter acquisition submodule 411 and an image generation submodule 412. The parameter acquisition submodule 411 may be configured to acquire, when the user's finger slides in the fingerprint collection area, a fingerprint of the finger and an acting position of the finger every predetermined time interval. The image generation submodule 412 may be configured to generate, after the finger stops sliding, the fingerprint image to be verified by compositing each fingerprint acquired by the parameter acquisition submodule 411 based on respective acting position.

Optionally, the image comparison module 420 may include a feature acquisition submodule 421, a feature comparison submodule 422, and a result determination submodule 423. The feature acquisition submodule 421 may be configured to acquire a first fingerprint feature formed in an overlapping area among each fingerprint of the fingerprint image to be verified, and a second fingerprint feature formed in an overlapping area among each fingerprint of the referential fingerprint image. The feature comparison submodule 422 may be configured to compare the first fingerprint feature with the second fingerprint feature. The result determination submodule 423 may be configured to determine, when it is determined by the feature comparison submodule 422 that the first fingerprint feature is the same as the second fingerprint feature, that the fingerprint image to be verified is the same as the referential fingerprint image.

Optionally, the device provided in the embodiment may further include a slide detection module 460, a second verification module 470, and a step trigger module 480. The slide detection module 460 may be configured to detect whether a slide direction of the finger is the same as a slide direction of generating the referential fingerprint image. The second verification module 470 may be configured to determine, when it is detected by the slide detection module 460 that the slide direction of the finger is different from the slide direction of generating the referential fingerprint image, that the verification of the user's fingerprint fails. The step trigger module 480 may be configured to trigger, when it is detected by the slide detection module 460 that the slide direction of the finger is the same as the slide direction of generating the referential fingerprint image, the first generation module to generate the fingerprint image to be verified.

In conclusion, in the device for verifying a fingerprint provided in the present disclosure, fingerprint image to be verified is generated when a user's finger slides in a fingerprint collection area; the fingerprint image to be verified is compared with a referential fingerprint image; and it is determined, when the fingerprint image to be verified is the same as the referential fingerprint image, that verification for the user's fingerprint succeeds. Thus, a dynamic fingerprint image to be verified may be generated through combination of a slide action of the finger and a fingerprint of the finger, and the verification of the fingerprint is performed using the dynamic fingerprint image to be verified. As a result, the problem that the terminal is not safe if the user's fingerprint is leaked in the case that the verification of the fingerprint is performed by utilizing a static fingerprint image to be verified may be solved, and the security of the terminal may be improved.

It may be determined, when the slide direction of the finger is different from the slide direction of generating the referential fingerprint image, the verification of the user's fingerprint fails. Since determination of the slide direction may be easier, the fingerprint to be verified with mismatched slide direction may be excluded firstly. Thus, a waste of resources used to generate the fingerprint images to be verified for these fingerprints may be avoided, and the resources may be saved.

Additionally, with respect to the device in the above embodiments, specific manners for individual modules therein performing operations have been described in detail in the method embodiments and will not be elaborated herein.

An exemplary embodiment of the present disclosure provides a device for verifying a fingerprint, the device may implement the method for verifying a fingerprint provided in the disclosure. The device for verifying a fingerprint may include: a processor; a memory for storing processor-executable instructions. The processor may be configured to: generate, when a user's finger slides in a fingerprint collection area, a fingerprint image to be verified; compare the fingerprint image to be verified with a referential fingerprint image; and determine, when the fingerprint image to be verified is the same as the referential fingerprint image, that verification of the user's fingerprint succeeds.

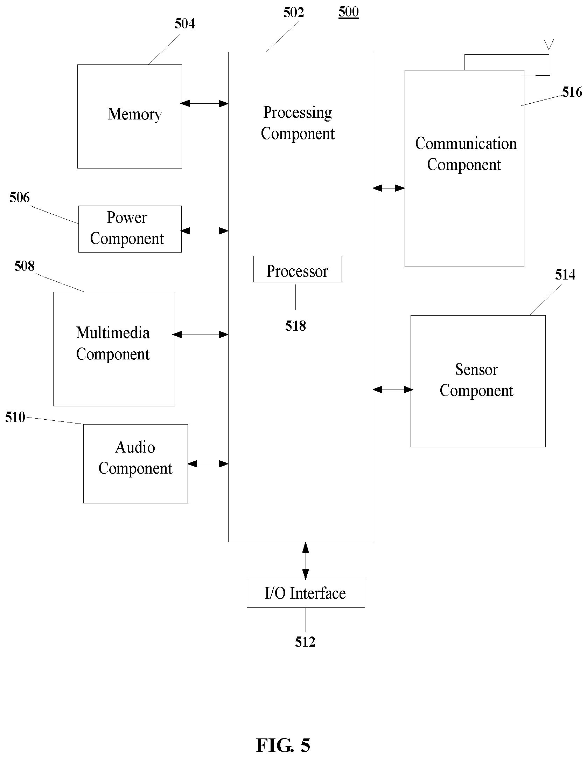

Fig. 5 is a block diagram illustrating a device for verifying a fingerprint according to an exemplary embodiment. For example, the device 500 may be a mobile phone, a computer, a digital broadcast terminal, a messaging device, a gaming console, a tablet, a medical device, an exercise equipment, a personal digital assistant, and the like.

Referring to Fig. 5, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 518 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the device 500 is in an operation mode, such as a photographing mode or a video mode. Each of the front camera and the rear camera may be a fixed optical lens system or have optical focusing and zooming capability.

The audio component 510 is configured to output and/or input audio signals. For example, the audio component 510 includes a microphone ("MIC") configured to receive an external audio signal when the device 500 is in an operation mode, such as a call mode, a recording mode and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500, relative positioning of components, e.g., the display and the keypad, of the device 500, a change in position of the device 500 or a component of the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor. The sensor component 514 includes a fingerprint sensor configured to collect a fingerprint of a user.

The communication component 516 is configured to facilitate communication, wired or wirelessly, between the device 500 and other devices. The device 500 can access a wireless network based on a communication standard, such as WiFi, 2G, or 3G, or a combination thereof. In one example embodiment, the communication component 516 receives a broadcast signal or broadcast associated information from an external broadcast management system via a broadcast channel. In one example embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer readable storage medium including instructions, such as included in the memory 504, executable by the processor 518 in the device 500, for performing the above-described methods. For example, the non-transitory computer-readable storage medium may be a ROM, a random access memory (RAM), a CD-ROM, a magnetic tape, a floppy disc, an optical data storage device, and the like.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and embodiments be considered as illustrative only, with a true scope of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the invention only be limited by the appended claims.

## Claims

1. A method for verifying a fingerprint, **characterized by** the steps of:
generating (101), when a user's finger slides in a fingerprint collection area, a fingerprint image to be verified;
comparing (102) the fingerprint image to be verified with a referential fingerprint image; and
determining (103), when the fingerprint image to be verified is the same as the referential fingerprint image, that verification for the user's fingerprint succeeds.

2. The method of claim 1, wherein the referential fingerprint image is determined by:
acquiring, when the user's finger slides in the fingerprint collection area, a fingerprint of the finger and an acting position of the finger every predetermined time interval; and
generating, after the finger stops sliding, the referential fingerprint image by compositing each fingerprint based on respective acting position.

3. The method of claim 1 or claim 2, wherein the generating (101), when a user's finger slides in a fingerprint collection area, a fingerprint image to be verified comprises:
acquiring (201), when the user's finger slides in the fingerprint collection area, a fingerprint of the finger and an acting position of the finger every predetermined time interval; and
generating (202), after the finger stops sliding, the fingerprint image to be verified by compositing each fingerprint based on respective acting position.

4. The method of claim 2, wherein the comparing (102) the fingerprint image to be verified with a referential fingerprint image comprises:
acquiring (203) a first fingerprint feature formed in an overlapping area among each fingerprint of the fingerprint image to be verified;
compositing (203) a second fingerprint feature formed in an overlapping area among each fingerprint of the referential fingerprint image;
comparing (204) the first fingerprint feature with the second fingerprint feature; and
determining (205), when the first fingerprint feature is the same as the second fingerprint feature, that the fingerprint image to be verified is the same as the referential fingerprint image.

5. The method of claim 2, further comprising:
detecting whether a slide direction of the finger is the same as a slide direction of generating the referential fingerprint image;
determining, when the slide direction of the finger is different from the slide direction of generating the referential fingerprint image, that the verification of the user's fingerprint fails; and
triggering, when the slide direction of the finger is the same as the slide direction of generating the referential fingerprint image, the step of generating a fingerprint image to be verified.

6. A device for verifying a fingerprint, **characterized by**:
a first generation module (310) configured to generate, when a user's finger slides in a fingerprint collection area, a fingerprint image to be verified;
an image comparison module (320) configured to compare the fingerprint image to be verified generated by the first generation module with a referential fingerprint image;
a first verification module (330) configured to determine, when it is determined by the image comparison module that the fingerprint image to be verified is the same as the referential fingerprint image, that verification of the user's fingerprint succeeds.

7. The device of claim 6, wherein the referential fingerprint image is determined by a parameter acquisition module (440), a second generation module (450), and an image storage module, and wherein
the parameter acquisition module (440) is configured to acquire, when the user's finger slides in the fingerprint collection area, a fingerprint of the finger and an acting position of the finger every predetermined time interval; and
the second generation module (450) is configured to generate, after the finger stops sliding, the referential fingerprint image by compositing each fingerprint based on respective acting position.

8. The device of claim 6 or claim 7, wherein the first generation module (410) comprises:
a parameter acquisition submodule (411) configured to acquire, when the user's finger slides in the fingerprint collection area, a fingerprint of the finger and an acting position of the finger every predetermined time interval; and
an image generation submodule (412) configured to generate, after the finger stops sliding, the fingerprint image to be verified by compositing each fingerprint acquired by the parameter acquisition submodule (411) based on respective acting position.

9. The device of claim 7, wherein the image comparison module (420) comprises:
a feature acquisition submodule (421) configured to acquire a first fingerprint feature formed in an overlapping area among each fingerprint of the fingerprint image to be verified, and composite a second fingerprint feature formed in an overlapping area among each fingerprint of the referential fingerprint image;
a feature comparison submodule (422) configured to compare the first fingerprint feature with the second fingerprint feature; and
a result determination submodule (423) configured to determine, when it is determined by the feature comparison submodule (422) that the first fingerprint feature is the same as the second fingerprint feature, that the fingerprint image to be verified is the same as the referential fingerprint image.

10. The device of claim 7, further comprising:
a slide detection module (460) configured to detect whether a slide direction of the finger is the same as a slide direction of compositing the referential fingerprint image;
a second verification module (470) configured to determine, when it is detected by the slide detection module that the slide direction of the finger is different from the slide direction of compositing the referential fingerprint image, that the verification of the user's fingerprint fails; and
a step trigger module (480) configured to trigger, when it is detected by the slide detection module that the slide direction of the finger is the same as the slide direction of compositing the referential fingerprint image, the first generation module to generate the fingerprint image to be verified.

11. A device (500) for verifying a fingerprint, **characterized by**:
a processor (518);
a memory (504) for storing processor-executable instructions;
wherein the processor (518) is configured to:
generate, when a user's finger slides in a fingerprint collection area, a fingerprint image to be verified;
compare the fingerprint image to be verified with a referential fingerprint image; and determine, when the fingerprint image to be verified is the same as the referential fingerprint image, that verification of the user's fingerprint succeeds.

12. A non-transitory computer-readable medium readable by a computer and having recorded thereon a computer program including instructions for executing the steps of a method for verifying a fingerprint according to claim 1.
